# EUROPÄISCHE PATENTSCHRIFT

(11) **EP 0 412 936 B1**
(45) Veröffentlichungstag und Bekanntmachung des Hinweises auf die Patenterteilung: **14.12.1994**
(21) Anmeldenummer: 90810584.4
(22) Anmeldetag: 01.08.1990
(51) Int. Cl.: C07F 9/6564, C07F 9/12, C07F 9/18, C08K 5/523, C08K 5/5398

(54) **Phosphorverbindungen**
Phosphorus compounds
Composés de phosphore

(30) Priorität: 09.08.1989 CH 2923/89
(43) Veröffentlichungstag der Anmeldung: 13.02.1991
(73) Patentinhaber: CIBA-GEIGY AG, 4002 Basel (CH)
(72) Erfinder: Flury, Peter, Dr., CH-4204 Himmelried (CH)

(56) Entgegenhaltungen:
- EP-B- 0 149 259
- SU-A- 897 797
- US-A- 3 689 602

## Beschreibung

Die vorliegende Erfindung betrifft neue Phosphorverbindungen, halogenfreie Polymere enthaltend diese Phosphorverbindungen sowie die Verwendung der Phosphorverbindungen als Flammhemmer für halogenfreie Polymere.

Die Flammwidrigkeit von Polymeren wird im allgemeinen verbessert durch Reduzierung des organischen und somit brennbaren Anteils; d.h. durch Zugabe von nicht respektive schwerbrennbaren Füllstoffen, wie z.B. Quarzmehl, Glas, Wollastonit, etc. Allerdings muss der Füllstoffanteil sehr hoch gewählt werden, um einen ausreichenden Flammschutz zu bedingen, was oft zu unlösbaren Problemen bei der Herstellung und Verarbeitung der Reaktionsharzmassen führt.

Eine weitere Möglichkeit ist der Zusatz von Flammschutzmitteln zu den Polymeren. In Frage kommen anorganische Zusätze wie beispielsweise Borverbindungen oder Metallhydroxide. Auch hier sind grosse Anteile an solchen Zusätzen erforderlich, was sich ebenfalls nachteilig auf die Herstellung und Verarbeitung auswirkt. Die Verwendung von halogenierten Verbindungen, wie beispielsweise bromiertes Bisphenol-A oder Dekabromdiphenylether, z.B. in Laminier- und Enkapsulierharzen hat den schwerwiegenden Nachteil, dass im Brandfall Halogenwasserstoff freigesetzt wird. Dieser ist nicht nur toxikologisch bedenklich, sondern er besitzt ein extrem grosses Korrosions-Potential, was im Brandfall einer elektrischen, insbesondere jedoch einer elektronischen, Einheit zu schwerwiegenden Sekundärschäden durch elektrochemische Korrosion führen kann.

Auch die Entsorgung solcher Polymere ist aus ökologischen Gründen in Frage gestellt, da bei der Verbrennung die potentielle Gefahr der Bildung von stark toxischen (dioxinähnlichen) Produkten besteht.

Aus der US Patentschrift 3,689,602 sind halogenierte Phosphorsäureester als flammhemmende Zusätze für Kunststoffe bekannt.

Der Einsatz von phosphor-organischen Verbindungen zur Flammhemmung, welche nicht in die Polymere eingebaut werden, bedingt eine Art Weichmachereffekt, was zu einer erheblichen Einbusse an mechanischen und elektrischen Eigenschaften der so flammhemmend behandelten Polymere führt. Z.B. werden die Festigkeitswerte bzw. die Glasumwandlungstemperatur aufgrund der weichmachenden Wirkung der phosphororganischen Verbindung erniedrigt. Zudem sind diese Verbindungen meist hydrolyseinstabil, was zu einer erhöhten Wasseraufnahme des Reaktionsharzformstoffes bei gleichzeitiger Bildung von verschiedenen Phosphorsäureverbindungen führt.

Aus der EP-A 265 196 sind halogenfreie sterisch gehinderte Phosphonate und Phosphate als Farbstabilisatoren für photographische Schichten bekannt.

Es wurde nun überraschend gefunden, dass durch voluminöse Gruppen abgeschirmte cyclische Phosphate respektive Thiophosphate die Erhöhung der Flammhemmung von Polymeren bewirken, ohne jedoch deren andere Eigenschaften, wie thermische Beständigkeit, mechanische Festigkeit, Dielektrizitätskonstante oder Wasseraufnahme, wesentlich zu beeinflussen.

Die vorliegende Erfindung betrifft Verbindungen der allgemeinen Formel I 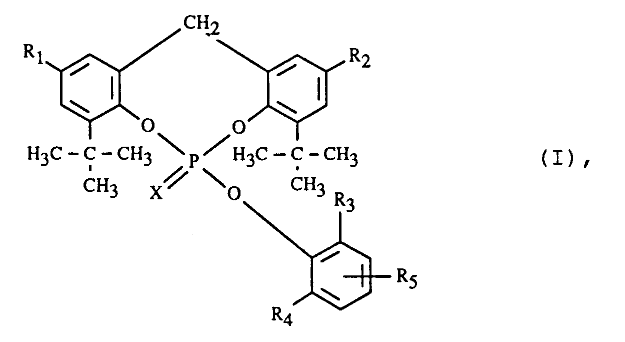
worin R₁ und R₂ unabhängig voneinander Wasserstoff, C₁-C₆-Alkyl, unsubstituiertes oder durch 1-3 C₁-C₄-Alkylgruppen substituiertes Phenyl oder Naphthyl, R₃ und R₄ unabhängig voneinander Wasserstoff oder C₁-C₄-Alkyl darstellen, wobei R₃ und R₄ nicht gleichzeitig Wasserstoff sind, ferner R₅ Wasserstoff, C₁-C₆-Alkyl, unsubstituiertes oder durch 1-3 C₁-C₄-Alkylgruppen substituiertes Phenyl oder Naphthyl und X Sauerstoff oder Schwefel bedeuten.

Bedeuten R₁, R₂ und R₅ C₁-C₆-Alkyl bzw. R₃ und R₄ C₁-C₄-Alkyl, so handelt es sich dabei um geradkettige und verzweigte Alkylreste wie z.B. Methyl, Ethyl, n-Propyl, Isopropyl, n-Butyl, Isobutyl, sec.-Butyl, tert.-Butyl und zusätzlich für R₁, R₂ und R₅ um n-Pentyl, Isopentyl oder n-Hexyl.

Bevorzugt ist R₅ in p-Stellung zur Esterbindung.

Stellen R₁, R₂ und R₅ durch 1-3 C₁-C₄-Alkylgruppen substituiertes Phenyl oder Naphthyl dar, so handelt es sich bei dem C₁-C₄-Alkyl um die gleichen Reste wie sie vorstehend für die Reste R₃ und R₄ definiert sind. Diese Substituenten können sich in jeder möglichen Position befinden. Bevorzugt ist jedoch die einfach Substitution, insbesondere in para-Stellung für Phenyl und 6- oder 7-Stellung für Naphthyl.

Bevorzugt sind Verbindungen der Formel I, worin R₁ und R₂ unabhängig voneinander Wasserstoff oder C₁-C₆-Alkyl, insbesondere Wasserstoff, Methyl oder Ethyl, bedeuten. Dabei haben R₁ und R₂ bevorzugt die gleiche Bedeutung.

In einer weiteren Bevorzugung haben R₃ und R₄ in den Verbindungen der Formel I die gleiche Bedeutung und stellen Methyl oder Ethyl, insbesondere jedoch Methyl dar.

Ebenfalls von Interesse sind Verbindungen der Formel I, worin R₃ Wasserstoff und R₅ Isopropyl oder tert.-Butyl bedeuten.

Eine weitere Ausführungsform stellen Verbindungen der Formel I dar, worin R₅ Wasserstoff oder C₁-C₄-Alkyl, insbesondere jedoch Wasserstoff oder Methyl bedeutet.

Besonders interessant sind Verbindungen der Formel I, worin X Schwefel darstellt.

Von ganz speziellem Interesse sind Verbindungen der Formel I, worin R₁ und R₂ Methyl, R₃ Wasserstoff oder Methyl, R₄ Methyl oder tert.-Butyl und R₅ Wasserstoff oder Methyl bedeuten.

Die Herstellung der Verbindungen der Formel I erfolgt nach an sich bekannter Weise.

Z.B. kann, zur Herstellung von Verbindungen der Formel I mit X gleich Sauerstoff, wie in der EP-A 265 196 beschrieben, ein Bisphenol der Formel II 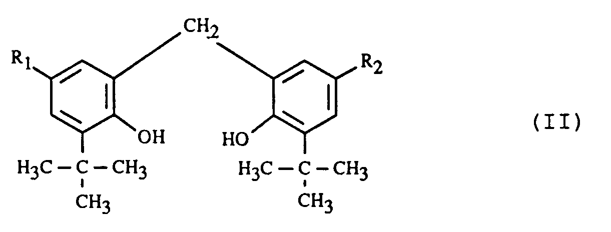
mit einem Phosphorsäuredichlorid der Formel III 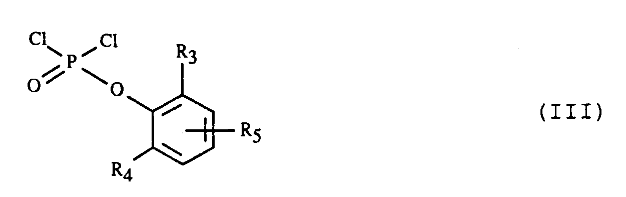
umgesetzt werden. Das Phosphorsäuredichlorid der Formel III wird beispielsweise durch Umsetzung des Phenols der Formel IV 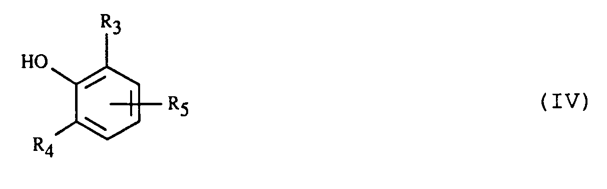
mit POCl₃ hergestellt.

Ein weitere Herstellungsmöglichkeit besteht in der stufenweisen Umsetzung eines Bisphenols der Formel II mit POCl₃ zum entsprechenden Phosphorsäurechlorid V, 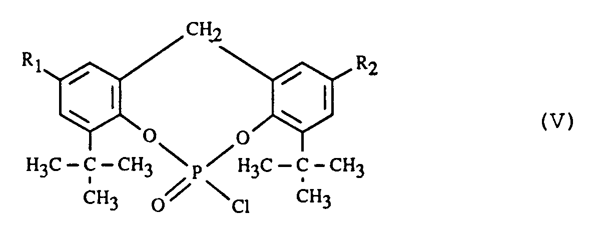
welches anschliessend mit einem Phenol der Formel IV zur Verbindung der Formel I umgesetzt wird.

Die Umsetzungen erfolgen zweckmässig bei Raumtemperatur oder bei erhöhter Temperatur in einem inerten Lösungsmittel, wie z.B. Toluol, in Gegenwart einer Base, wie z.B. Triethylamin oder Pyridin.

Die Herstellung der Verbindungen der Formel I, worin X Schwefel darstellt, erfolgt beispielsweise durch Umsetzung eines Bisphenols der Formel II mit PCl₃ zum entsprechenden Phosphorigsäurechlorid, das anschliessend mit einem Phenol der Formel IV zum Phosphit der Formel VI 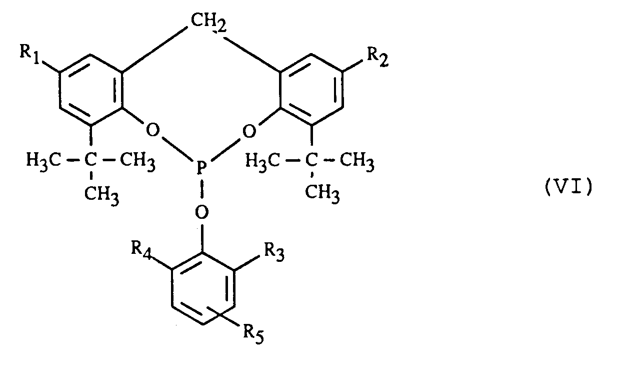
umgesetzt wird, welches anschliessend durch Reaktion mit elementarem Schwefel in an sich bekannter Weise (S. Houben-Weyl "Methoden der Org. Chemie", Band 12/2, Seite 647) in die Verbindung der Formel I mit X gleich Schwefel übergeführt wird.

Die Verbindungen der Formel I, worin X Sauerstoff darstellt, können selbstverständlich auch durch Oxidation der Verbindungen der Formel VI, z.B. mit Peressigsäure etc., hergestellt werden.

Die Verbindungen der Formel I sind als flammhemmende Substanzen für Polymere, insbesondere für halogenfreie Polymere hervorragend geeignet.

Die Menge der den Polymeren als Flammhemmer zuzusetzenden Verbindungen der Formel I kann innerhalb weiter Grenzen variieren. Im allgemeinen verwendet man 0,1 bis 100 Gewichtsteile, bezogen auf 100 Teile des Polymeren. Bevorzugt verwendet man 0,5 bis 30 Gewichtsteile und besonders bevorzugt 2 bis 20 Gewichtsteile der Verbindungen der Formel I, bezogen auf 100 Gewichtsteile des Polymeren. Die optimale Menge hängt von der Natur des Polymeren und der Art der eingesetzten Verbindung der Formel I ab und kann leicht durch Versuche ermittelt werden.
Da die Verbindungen der Formel I im allgemeinen schon bei geringen Zusatzmengen wirksam und zudem halogenfrei sind, verursachen sie im Polymeren gegenüber anderen bekannten Flammhemmern weniger unerwünschte Effekte.

Die Verbindungen der Formel I können ja nach Art des verwendeten Polymeren und den gewünschten Eigenschaften in verschiedener physikalischer Form angewendet werden. So können sie z.B. zum Erzielen einer besseren Dispersion im Polymeren zu einer feinteiligen Form vermahlen werden. Falls erwünscht können auch Gemische verschiedener Verbindungen der Formel I eingesetzt werden.

Die Verbindungen der Formel I können in verschiedenen Polymeren angewendet werden. Geeignete Polymere, die damit flammfest gemacht werden können, sind z.B.
1. Polyphenylenoxide und -sulfide sowie Gemische dieser Polymeren mit Polystyrolpfropfpolymeren oder Styrolcopolymeren, wie z.B. hoch schlagfestes Polystyrol, und EPDM-Copolymere mit Kautschuken, sowie Gemische von Polyphenylenoxiden mit Polyamiden und Polyestern.
2. Polyurethane, die sich von Polyethern, Polyestern oder Polybutadien mit endständigen Hydroxylgruppen einerseits und aliphatischen oder aromatischen Polyisocyanaten andererseits ableiten, einschliesslich Polyisocyanurate und Vorläufer davon.
3. Polyamide und Copolyamide, die sich von Diaminen und Dicarbonsäuren und/oder von Aminocarbonsäuren oder den entsprechenden Lactamen ableiten, wie Polamid 4, Polyamid 6, Polyamid 6/6, Polyamid 6/10, Polyamid 11, Polyamid 12, Poly-2,4,4-trimethylhexamethylenterephthalamid oder Poly-m-phenylenisophthalamid sowie Copolymere davon mit Polyethern, wie z.B. mit Polyethylenglykolen, Polypropylenglykolen oder Polytetramethylenglykolen.
4. Polyester, die sich von Dicarbonsäuren und Dialkoholen und/oder Hydroxycarbonsäuren oder den entsprechenden Lactonen ableiten, wie z.B. Polyethylenterephthalat, Polybutylenterephthalat, Poly-1,4-dimethylol-cyclohexan-terephthalat und Polyhydroxybenzoate sowie Block-Copolyester-ester, die sich von Polyethern mit endständigen Hydroxylgruppen ableiten.
5. Ungesättigte Polyester die sich von Copolyestern aus gesättigten und ungesättigten Dicarbonsäuren und mehrwertigen Alkoholen und Vinylverbindungen als Vernetzungsmittel ableiten.
6. Polystyrol.
7. Pfropfcopolymere von Styrol, wie z.B. Styrol auf Polybutadien, Styrol und Acrylnitril auf Polybutadien, Styrol und Alkylacrylate oder -methacrylate auf Polybutadien, Styrol und Acrylnitril auf Ethylen/Propylen/Dien-Terpolymere, Styrol und Acrylnitril auf Acrylat/Butadien-Copolymere, sowie Gemische davon mit statistischen Copolymeren aus Styrol oder α-Methylstyrol und Dienen oder Acrylsäurederivaten, wie z.B. die als ABS, MBS, ASA oder AES bekannten Styrol-Terpolymere.
8. Vernetzte Epoxidharze, die sich von Polyepoxiden ableiten, wie z.B. von Bis-diglycidylethern, besonders Bisphenol-A-diglycidylethern, oder von cycloaliphatischen Diepoxiden.
9. Polycarbonate.

Insbesondere geeignet sind die vernetzten Epoxidharze.

Daher betrifft die vorliegende Erfindung auch Zusammensetzungen enthaltend ein halogenfreies Polymer und als flammhemmenden Zusatz mindestens eine Verbindung der Formel I.

Die erfindungsgemässen Zusammensetzungen können auch weitere übliche Zusätze enthalten, wie z.B. Hitzestabilisatoren, Lichtstabilisatoren, UV-Absorber, Antioxidantien, antistatische Mittel, Konservierungsmittel, Haftvermittler, Füllstoffe, Pigmente, Schmierstoffe, Verschäumungsmittel, Fungizide, Weichmacher, Verarbeitungshilfsmittel, weitere flammhemmende Zusätze und Mittel zum Verringern der Rauchentwicklung.

Als zusätzliche Flammhemmer, die zusammen mit den erfindungsgemäss verwendeten Verbindungen der Formel I eingesetzt werden können, kommen z.B. phosphorhaltige Salze, wie z.B. Ammoniumpolyphosphate, Antimontrioxid, Aluminiumhydroxid, Wismutoxid, Molybdänoxid oder Gemische dieser Verbindungen mit Zink- und/oder Magnesiumoxid oder -salzen, in Betracht.

Die Erfindung wird durch die folgenden Beispiele näher erläutert.

### Beispiel 1

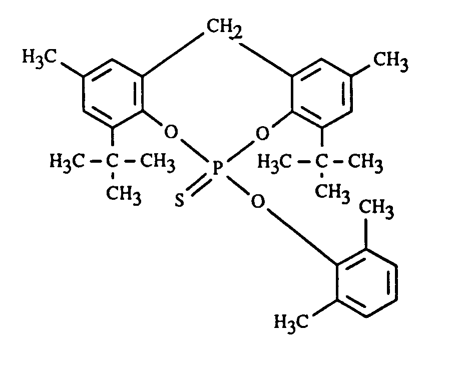

### 1. Stufe

Eine Apparatur bestehend aus 2,5 l Sulfierkolben, Oelbad, Thermometer, Kühler und Trockenrohr beschickt man mit 137,0 g (1,0 Mol) Phosphortrichlorid und 500 ml Toluol. Dazu tropft man in ca. 30 Min. bei Raumtemperatur eine Lösung von 340,5 g (1 Mol) 2,2′-Methylen-bis-(4-methyl-6-tert.-butyl-phenol) und 264,0 g (3,3 Mol) Pyridin in 200 ml Toluol. Nun lässt man eine Stunde unter Rückfluss rühren und gibt anschliessend rasch eine Lösung von 130,0 g 2,6-Dimethyl-phenol in 330 ml Toluol zu. Nun lässt man 10 Stunden unter Rückfluss rühren, kühlt danach ab und giesst auf 1,2 l Wasser. Die organische Phase trennt man ab und wäscht mit verd. HCl und verd. NaHCO₃-Lösung. Nach dem Trocknen mit Natriumsulfat wird am Rotationsverdampfer eingedampft. Der verbleibende Rückstand wird aus Isopropanol umkristallisiert. Dabei verbleiben 390 g (80 % der Theorie) farblose Kristalle mit Fp. 139°C des Zwischenprodukts der Struktur (1) 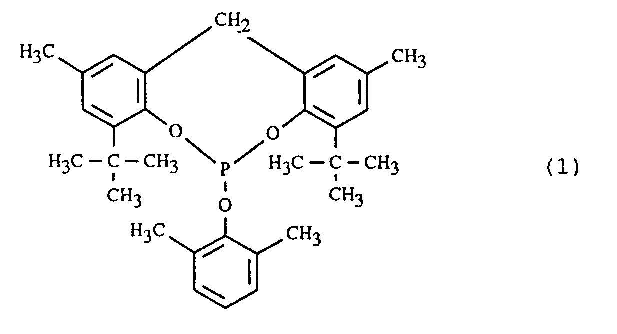
- ¹H-NMR:(CDCl₃):: 1,2 (s, 18 H, t.-Butyl); 2,3 (s, 6 H, CH₃); 2,5 (s, 6 H, CH₃); 3,3-4,5 (m, 2 H, -CH₂-); 7,0-7,2 (m, 7 H, Aryl).

| | | | | |
|---|---|---|---|---|
| C₃₁H₃₉O₃P (462,6) | Ber. | C: 75,8 %; | H: 7,9 %; | P: 6,3 % |
| | Gef. | C: 75,8 %; | H: 7,9 %; | P: 6,4 % |

### 2. Stufe

Eine Apparatur bestehend aus einem 750 ml Sulfierkolben, Thermometer und Oelbad beschickt man mit 269,0 g (0,548 Mol) des Zwischenprodukts der Struktur (1) und 19,3 g (0,603 Mol) Schwefel und heizt während 3 Stunden auf eine Innentemperatur von 180°C. Danach kühlt man ab und kristallisiert das Reaktionsgemisch aus Gemisch Methyl-ethylketon/Ethanol um. Es verbleiben 235 g (82 % der Theorie) farblose Kristalle mit Fp. 168°C.
- ¹H-NMR:(CDCl₃):: 1,25 (s, 18 H, t.-Butyl); 2,3 (s, 6 H, CH₃); 2,5 (s, 6 H, CH₃); 3,4-4,5 (m, 2 H, -CH₂-); 7,0 (s, br, 7 H, Aryl).

| | | | | | |
|---|---|---|---|---|---|
| C₃₁H₃₉O₃PS (522,68) | Ber. | C: 71,24 %; | H: 7,52 %; | S: 6,13 % | P: 5,93 % |
| | Gef. | C: 10,90 %; | H: 7,60 %; | S: 6,30 % | P: 6,10 % |

### Beispiel 2

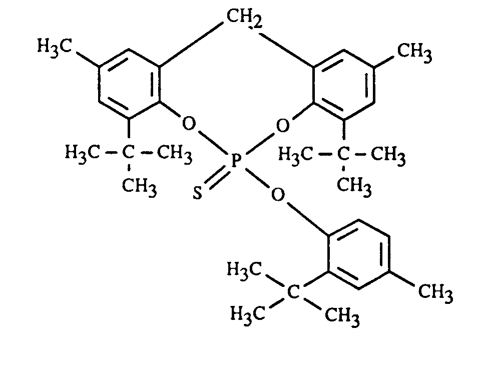

### 1. Stufe

Analog zur Durchführung von Beispiel 1, Stufe 1, wird das Zwischenprodukt der Struktur (2) unter Verwendung von 2-tert.-Butyl-6-methyl-phenol anstelle von 2,6-Dimethylphenol hergestellt.

Das Reaktionsgemisch wird aus Isopropanol umkristallisiert. Dabei verbleiben 78 % der Theorie farblose Kristalle mit Fp. 200°C des Zwischenprodukts der Struktur (2) 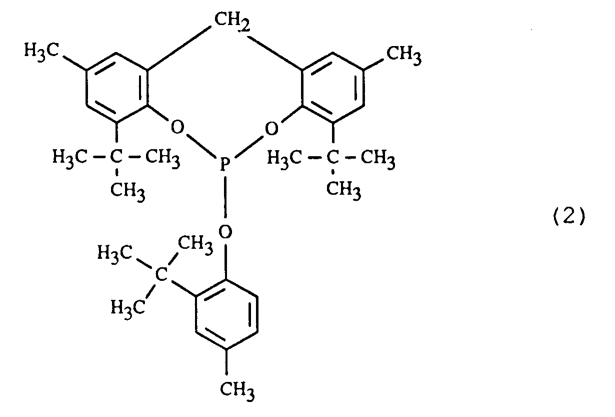
- ¹H-NMR:(CDCl):: 1,3 (s, 18 H, t.-Butyl); 1,5 (s, 9 H, t.-Butyl); 2,3 (s, br, 9H, CH₃); 3,4-4,5 (m, 2 H, -CH₂-); 6,9-7,6 (m, 7 H, Aryl).

| | | | | |
|---|---|---|---|---|
| C₃₄H₄₅O₃P (462,6) | Ber. | C: 76,7 %; | H: 8,5 %; | P: 5,8 % |
| | Gef. | C: 76,8 %; | H: 8,6 %; | P: 5,8 % |

### 2. Stufe

Eine Apparatur bestehend aus einem 750 ml Sulfierkolben, Thermometer, Kühler, Oelbad und Trockenrohr beschickt man mit 266,4 g (0,50 Mol) des Zwischenprodukts der Struktur (2), 16,8 g (0,525 Mol) Schwefel und 70 ml Dekalin und heizt mit dem Oelbad während 3 Stunden auf 200°C. Danach kühlt man auf 100°C und setzt 150 ml Methylethylketon zu. Zu dieser Lösung werden nun noch 100 ml Ethanol getropft und anschliessend lässt man auf Raumtemperatur abkühlen. Dabei bildet sich ein farbloser Niederschlag, welcher abfiltriert, mit Ethanol gewaschen und im Vakuum getrocknet wird. Ausbeute: 267 g (94 % der Theorie) mit Fp. 215°C.
- ¹H-NMR:(CDCl₃):: 1,3 (s, 18 H, t.-Butyl); 1,45 (s, 9 H, t.-Butyl); 2,3 (s, 6H, CH₃); 6,95-7,80 (m, 7 H, Aryl).

| | | | | | |
|---|---|---|---|---|---|
| C₃₄H₄₅O₃PS (564,77) | Ber. | C: 72,3 %; | H: 8,0 %; | P: 5,5 % | S: 5,7 % |
| | Gef. | C: 72,2 %; | H: 8,0 %; | P: 5,5 % | S: 5,8 % |

### Beispiel 3

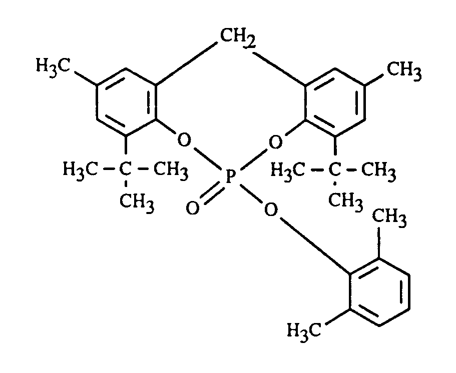

Eine Apparatur bestehend aus 2,5 l Sulfierkolben, Oelbad, Thermometer, Kühler und Trockenrohr beschickt man mit 153,3 g (1,0 Mol) Phosphoroxychlorid und 400 ml Xylol. Dazu tropft man in ca. 30 Min. bei Raumtemperatur eine Lösung von 122,2 g 2,6-Dimethyl-phenol und 396,0 g (5,0 Mol) Pyridin in 175 ml Xylol. Nun lässt man eine Stunde unter Rückfluss rühren und gibt anschliessend rasch eine Lösung von 340,5 g (1,0 Mol) 2,2′-Methylen-bis-(4-methyl-6-tert.-butyl-phenol) und 79,2 g (1,0 Mol) Pyridin in 250 ml Xylol zu. Danach rührt man 40 Stunden unter Rückfluss, kühlt ab und giesst auf 1,4 l Wasser und trennt von der organischen Phase. Diese wird nun mit verd. HCl und verd. NaHCO₃-Lösung gewaschen, über Natriumsulfat getrocknet und am Rotationsverdampfer eingedampft. Den Rückstand kristallisiert man aus Ethanol. Es verbleiben 408 g (81 % der Theorie) farblose Kristalle mit Fp. 159°C.
- ¹H-NMR:(CDCl₃):: 1,2 (s, 18 H, tert.-Butylgruppen); 2,3 (s, 6 H, CH₃); 3,5-4,5 (m, 2 H, -CH₂-); 7,5 (s, br, 7 H, Aryl).

| | | | | |
|---|---|---|---|---|
| C₃₁H₃₉O₄P (506,62) | Ber. | C: 73,49 %; | H: 7,76 %; | P: 6,11 % |
| | Gef. | C: 73,61 %; | H: 7,78 %; | P: 5,96 % |

### Beispiel 4

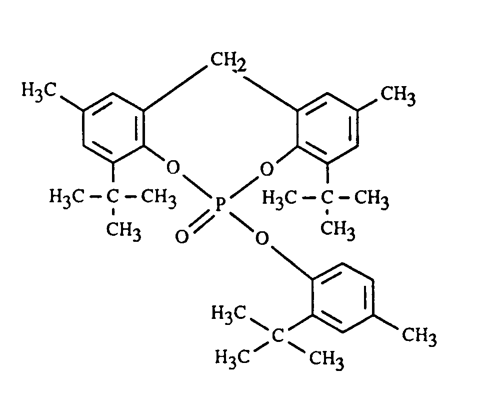

Die obige Verbindung wird analog zu Beispiel 3 unter Verwendung von 2-tert.-Butyl-6-methyl-phenol anstelle von 2,6-Dimethylphenol hergestellt.

Das Reaktionsgemisch wird aus Toluol umkristallisiert. Dabei verbleiben 416 g (76 % der Theorie) farblose Kristalle mit Fp. 224°C.
- ¹H-NMR:(CDCl₃):: 1,3 (s, 18 H, t.-Butyl); 1,45 (s, 9 H, t.-Butyl); 2,3 (s, 6H, CH₃); 2,35 (s, 3 H, CH₃); 3,7-4,4 (m, 2 H, -CH₂-); 6,95-7,70 (m, 7 H, Aryl).

| | | | | |
|---|---|---|---|---|
| C₃₄H₄₅O₄P (548,70) | Ber. | C: 74,4 %; | H: 8,3 %; | P: 5,6 % |
| | Gef. | C: 74,3 %; | H: 8,4 %; | P: 5,7 % |

### Beispiel 5

Es werden aus dem folgenden Epoxidharz unter Zusatz der Flammhemmer der Beispiele 1 bis 4 Prüfkörper (4 mm-Platten) hergestellt.
100 Gew.-Teile Bisphenol-A-diglycidylether (Epoxidgehalt 5,6 Aeq./kg)
10 Gew.-Teile eines Gemischs aus 25 Gew.-Teilen Dicyandiamid und 75 Gew.-Teilen oligomerem Cyanoguanidin (gemäss EP-A 306 451, Bsp. 3)
0,3 Gew.-Teile 2-Methyl-imidazol
15 Gew.-Teile Flammhemmer.

Die Prüfkörper werden 1 h bei 160°C und 2 h bei 180.C gehärtet, worauf ein gelbliches, klares Epoxidharz erhalten wird.

Nach der Entformung werden die Prüfkörper auf ihre Brennbarkeit nach der Norm von Underwriters Laboratories Inc. UL 94, dritte Ausgabe (Revision) vom 25. Sept. 1981 (Horizontale Brennbarkeitsprüfung) geprüft.

Weiter wird die Glasübergangstemperatur mit Hilfe der DSC-Methode (Differential Scanning Calorimetry) ermittelt, sowie die Koch- und Kaltwasseraufnahme bestimmt.

Ebenso wird eine Thermogravimetrie durchgeführt, wobei die Temperatur bestimmt wird, bei der der Prüfkörper einen Gewichtsverlust von 5 respektive 10 Gew.-% aufweist.

Die Resultate sind in Tabelle 1 wiedergegeben.

**Tabelle 1**

| Flammhemmer gemäss Beispiel | - | 1 | 2 | 3 | 4 |
|---|---|---|---|---|---|
| Flammhemmung nach UL an 4 mm | brennt | V-O | V-O | V-O | V-O |
| Glasumwandlungstemperatur (DSC) [°C] | 150 | 138 | 140 | 141 | 145 |
| Kochwasseraufnahme (4 mm/1 h) [Gew.-%] | 0,39 | 0,29 | 0,42 | 0,40 | 0,38 |
| Kaltwasseraufnahme (4 mm/4 Tage) [Gew.-%] | 0,43 | | | 0,35 | 0,40 |

| Thermogravimetrie | | | | | |
|---|---|---|---|---|---|
| t (-5 Gew.-%) [°C] | 325 | 270 | 280 | 290 | 300 |
| t (-10 Gew.-%) [°C] | 345 | 300 | 305 | 310 | 315 |

## Patentansprüche (Patentansprüche für folgende(n) Vertragsstaat(en): CH, DE, FR, GB, IT, LI, NL, SE)

1. Verbindungen der allgemeinen Formel I 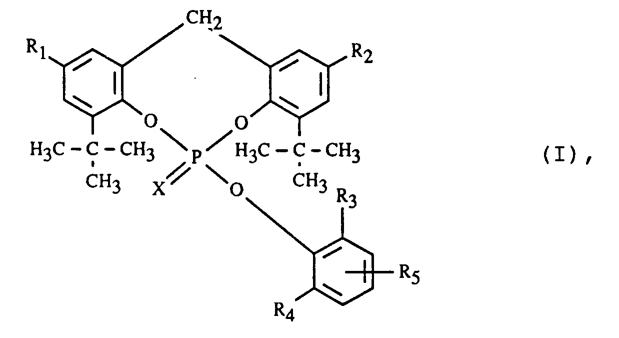 worin R₁ und R₂ unabhängig voneinander Wasserstoff, C₁-C₆-Alkyl, unsubstituiertes oder durch 1-3 C₁-C₄-Alkylgruppen substituiertes Phenyl oder Naphthyl, R₃ und R₄ unabhängig voneinander Wasserstoff oder C₁-C₄-Alkyl darstellen, wobei R₃ und R₄ nicht gleichzeitig Wasserstoff sind, ferner R₅ Wasserstoff, C₁-C₆-Alkyl, unsubstituiertes oder durch 1-3 C₁-C₄-Alkylgruppen substituiertes Phenyl oder Naphthyl und X Sauerstoff oder Schwefel bedeuten.

2. Verbindungen gemäss Anspruch 1, worin R₁ und R₂ unabhängig voneinander Wasserstoff oder C₁-C₆-Alkyl bedeuten.

3. Verbindungen gemäss Anspruch 1, worin R₃ und R₄ gleich sind und Methyl oder Ethyl bedeuten.

4. Verbindungen gemäss Anspruch 1, worin R₃ Wasserstoff und R₄ Isopropyl oder tert.-Butyl bedeuten.

5. Verbindungen gemäss Anspruch 2, worin R₁ und R₂ gleich sind.

6. Verbindungen gemäss Anspruch 5, worin R₁ und R₂ Wasserstoff, Methyl oder Ethyl bedeuten.

7. Verbindungen gemäss Anspruch 3, worin R₃ und R₄ Methyl bedeuten.

8. Verbindungen gemäss Anspruch 1, worin R₅ Wasserstoff oder C₁-C₄-Alkyl bedeutet.

9. Verbindungen gemäss Anspruch 1, worin R₁ und R₂ Methyl, R₃ Wasserstoff oder Methyl, R₄ Methyl oder tert.-Butyl und R₅ Wasserstoff oder Methyl bedeuten.

10. Verbindungen gemäss Anspruch 1, worin X Schwefel bedeutet.

11. Zusammensetzung enthaltend ein halogenfreies Polymer und als flammhemmenden Zusatz mindestens eine Verbindung der Formel I nach Anspruch 1.

12. Zusammensetzung gemäss Anspruch 11, worin die Menge des flammhemmenden Zusatzes 0,1 bis 100 Gewichtsteile, bezogen auf 100 Gewichtsteile des Polymeren, beträgt.

13. Zusammensetzung gemäss Anspruch 11, worin das halogenfreie Polymer ein vernetztes Epoxidharz ist.

14. Verwendung von Verbindungen der Formel I nach Anspruch 1 als Flammhemmer für halogenfreie Polymere.

## Patentansprüche (Patentansprüche für folgende(n) Vertragsstaat(en): ES)

1. Verfahren zur Herstellung von Verbindungen der allgemeinen Formel I 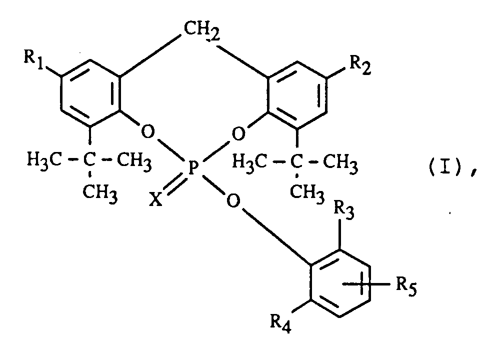 worin R₁ und R₂ unabhängig voneinander Wasserstoff, C₁-C₆-Alkyl, unsubstituiertes oder durch 1-3 C₁-C₄-Alkylgruppen substituiertes Phenyl oder Naphthyl, R₃ und R₄ unabhängig voneinander Wasserstoff oder C₁-C₄-Alkyl darstellen, wobei R₃ und R₄ nicht gleichzeitig Wasserstoff sind, ferner R₅ Wasserstoff, C₁-C₆-Alkyl, unsubstituiertes oder durch 1-3 C₁-C₄-Alkylgruppen substituiertes Phenyl oder Naphthyl und X Sauerstoff oder Schwefel bedeuten, dadurch gekennzeichnet, dass man, wenn X gleich Sauerstoff ist, ein Bisphenol der Formel II 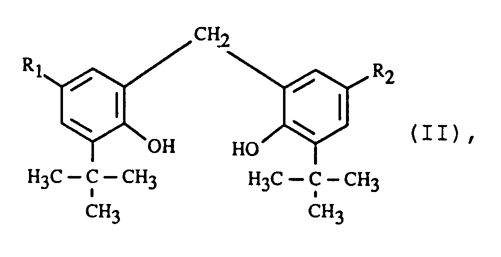 worin R₁ und R₂ die gleiche Bedeutung wie in Formel I haben, mit einem Phosphorsäuredichlorid der Formel III 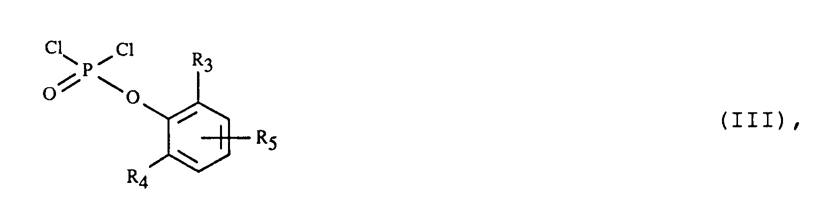 worin R₃, R₄ und R₅ die gleiche Bedeutung wie in Formel I haben, zur Verbindung der Formel I umsetzt oder, indem man ein Bisphenol der Formel II mit POCl₃ zum Phosphorsäurechlorid der Formel V 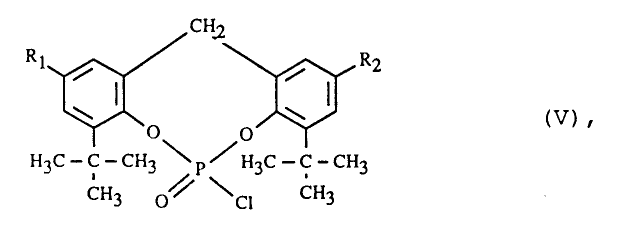 worin R₁ und R₂ die gleiche Bedeutung haben, umsetzt, welches anschliessend mit einem Phenol der Formel IV 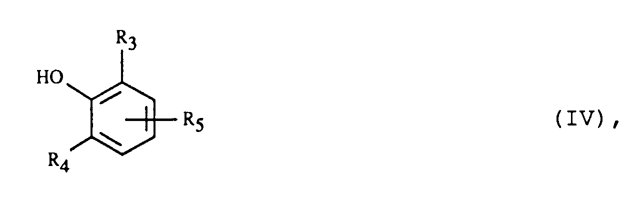 worin R₃, R₄ und R₅ die gleiche Bedeutung wie in Formel I haben, zu einer Verbindung der Formel I umsetzt, oder, wenn X gleich Schwefel ist, ein Bisphenol der Formel II mit PCl₃ zum entsprechenden Phosphorigsäurechlorid umsetzt, das anschliessend mit einem Phenol der Formel IV zum Phosphit der Formel VI 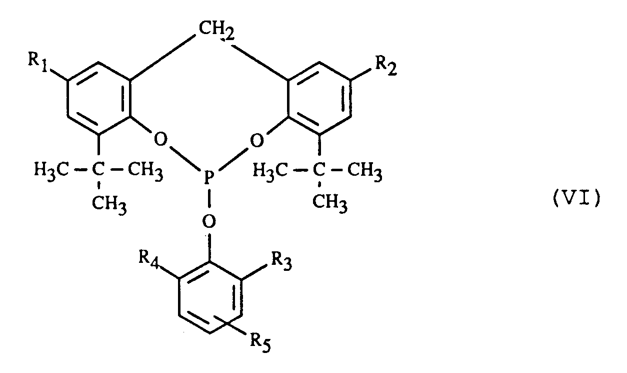 umgesetzt wird, welches anschliessend durch Reaktion mit elementarem Schwefel in eine Verbindung der Formel I übergeführt wird.

2. Verfahren zur Herstellung von Verbindungen der Formel I gemäss Anspruch 1, worin X Sauerstoff darstellt, dadurch gekennzeichnet, dass man eine Verbindung der Formel VI durch Oxidation in eine Verbindung der Formel I überführt.

3. Verfahren gemäss Anspruch 2, dadurch gekennzeichnet, dass man als Oxidationsmittel eine Persäure, vorzugsweise Peressigsäure, einsetzt.

## Claims (Claims for the following Contracting State(s): CH, DE, FR, GB, IT, LI, NL, SE)

1. A compound of the general formula I 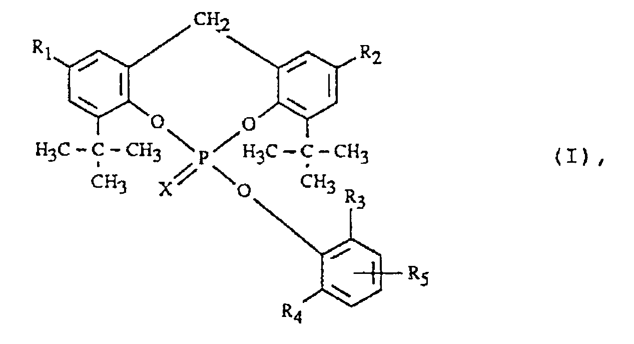 in which R₁ and R₂ independently of one another are hydrogen, C₁-C₆alkyl, or phenyl or naphthyl which is unsubstituted or substituted by 1-3 C₁-C₄alkyl groups,
R₃ and R₄ independently of one another are hydrogen or C₁-C₄alkyl, where R₃ and R₄ are not simultaneously hydrogen, and furthermore
R₅ is hydrogen, C₁-C₆alkyl or phenyl or naphthyl which is unsubstituted or substituted by 1-3 C₁-C₄alkyl groups and
X is oxygen or sulphur.

2. A compound according to claim 1, in which
R₁ and R₂ independently of one another are hydrogen or C₁-C₆alkyl.

3. A compound according to claim 1, in which
R₃ and R₄ are identical and are methyl or ethyl.

4. A compound according to claim 1, in which
R₃ is hydrogen and
R₄ is isopropyl or tert-butyl.

5. A compound according to claim 2, in which
R₁ and R₂ are identical.

6. A compound according to claim 5, in which
R₁ and R₂ are hydrogen, methyl or ethyl.

7. A compound according to claim 3, in which
R₃ and R₄ are methyl.

8. A compound according to claim 1, in which
R₅ is hydrogen or C₁-C₄alkyl.

9. A compound according to claim 1, in which
R₁ and R₂ are methyl,
R₃ is hydrogen or methyl,
R₄ is methyl or tert-butyl and
R₅ is hydrogen or methyl.

10. A compound according to claim 1, in which
X is sulphur.

11. A composition comprising a halogen-free polymer and, as a flame retardant additive, at least one compound of the formula I according to Claim 1.

12. A compound according to claim 11, in which the amount of flame retardant additive is 0.1 to 100 parts by weight per 100 parts by weight of the polymer.

13. A composition according to claim 11, in which the halogen-free polymer is a crosslinked epoxy resin.

14. The use of a compound of the formula I according to claim 1 as a flame retardant for halogen- free polymers.

## Claims (Claims for the following Contracting State(s): ES)

1. A process for the preparation of a compound of the general formula I 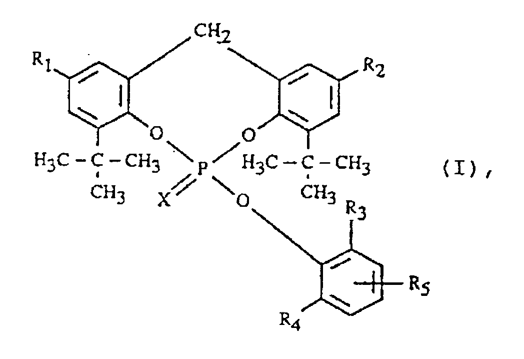 in which R₁ and R₂ independently of one another are hydrogen, C₁-C₆alkyl, or phenyl or naphthyl which is unsubstituted or substituted by 1-3 C₁-C₄alkyl groups,
R₃ and R₄ independently of one another are hydrogen or C₁-C₄alkyl, where R₃ and R₄ are not simultaneously hydrogen, and furthermore
R₅ is hydrogen, C₁-C₆alkyl or phenyl or naphthyl which is unsubstituted or substituted by 1-3 C₁-C₄alkyl groups and
X is oxygen or sulphur, which comprises, if X is oxygen, reacting a bisphenol of the formula II 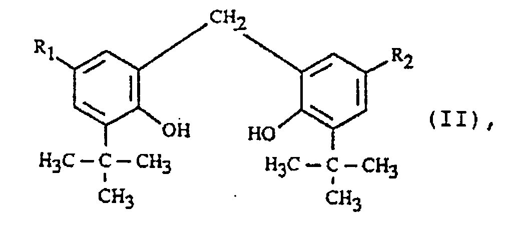 in which R₁ and R₂ are as defined in formula I,
with a phosphoric acid dichloride of the formula III 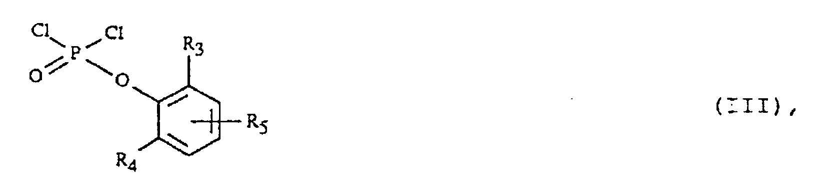 in which R₃, R₄ and R₅ are as defined in formula I, to give the compound of the formula I, or reacting a bisphenol of the formula II with POCl₃ to give the phosphoric acid chloride of the formula V 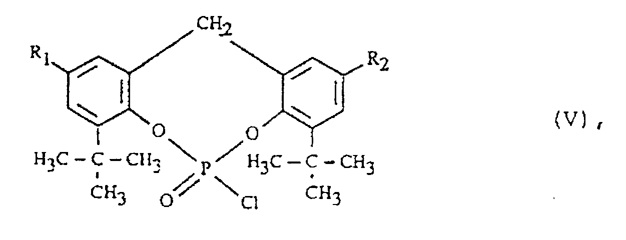 in which R₁ and R₂ are as defined in formula I,
which is then reacted with a phenol of the formula IV 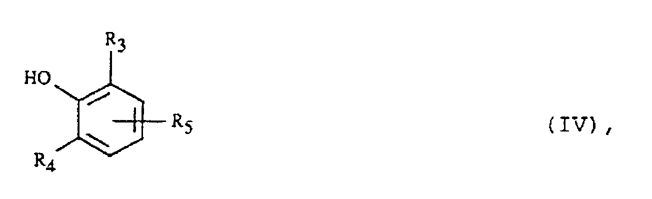 in which R₃, R₄ and R₅ are as defined in formula I,
to give a compound of the formula I, or, if X is sulphur, reacting a bisphenol of the formula II with PCl₃ to give the corresponding phosphorous acid chloride, which is then reacted with a phenol of the formula IV to give the phosphite of the formula VI 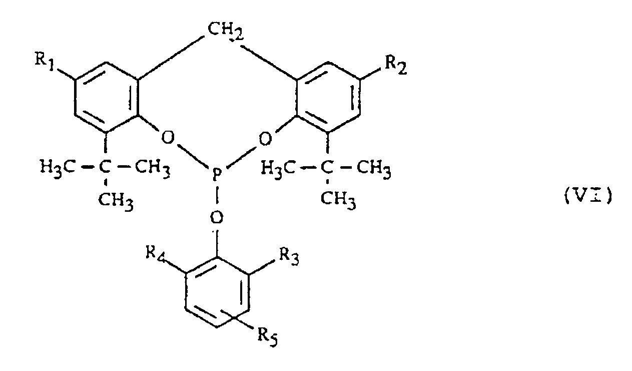 which is subsequently converted into a compound of the formula I by reaction with elemental sulphur.

2. A process for the preparation of the compound of the formula I according to claim 1, in which
X is oxygen,
which comprises converting a compound of the formula VI into a compound of the formula I by oxidation.

3. A process according to claim 2, wherein a per-acid, preferably peracetic acid, is employed as the oxidizing agent.

## Revendications (Revendications pour l'(les) Etat(s) contractant(s) suivant(s): CH, DE, FR, GB, IT, LI, NL, SE)

1. Composés de formule générale I 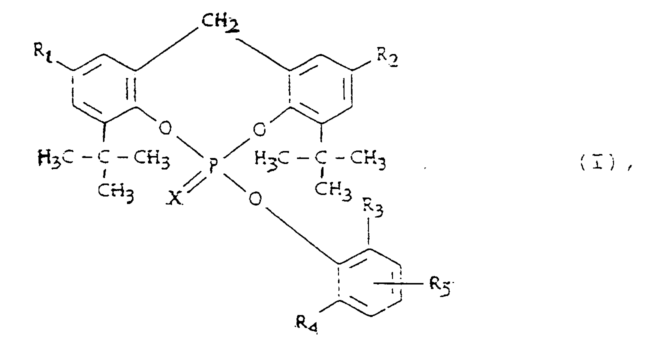 dans laquelle R₁ et R₂, indépendamment l'un de l'autre, représentent l'hydrogène, un alkyle en C₁-C₆, le phényle ou le naphtyle non substitués ou substitués par de 1 à 3 groupes alkyle en C₁-C₄, R₃ et R₄, indépendamment l'un de l'autre, représentent l'hydrogène ou un alkyle en C₁-C₄, R₃ et R₄ n'étant pas en même temps de l'hydrogène, en outre R₅ représente l'hydrogène, un alkyle en C₁-C₆, le phényle ou le naphtyle non substitués ou substitués par de 1 à 3 groupes alkyle en C₁-C₄, et X représente l'oxygène ou le soufre.

2. Composés selon la revendication 1, où R₁ et R₂, indépendamment l'un de l'autre, représentent l'hydrogène ou un alkyle en C₁-C₆.

3. Composés selon la revendication 1, où R₃ et R₄ sont identiques et représentent le méthyle ou l'éthyle.

4. Composés selon la revendication 1, où R₃ représente l'hydrogène et R₄ représente l'isopropyle ou le tert-butyle.

5. Composés selon la revendication 2, où R₁ et R₂ sont identiques.

6. Composés selon la revendication 5, où R₁ et R₂ représentent l'hydrogène, le méthyle ou l'éthyle.

7. Composés selon la revendication 3, où R₃ et R₄ représentent le méthyle.

8. Composés selon la revendication 1, où R₅ représente l'hydrogène ou un alkyle en C₁-C₄.

9. Composés selon la revendication 1, où R₁ et R₂ représentent le méthyle, R₃ représente l'hydrogène ou le méthyle, R₄ représente le méthyle ou le tert-butyle et R₅ représente l'hydrogène ou le méthyle.

10. Composés selon la revendication 1, où X représente le soufre.

11. Composition comportant un polymère dépourvu d'halogène et, comme addition ignifuge, au moins un composé de formule I selon la revendication 1.

12. Composition selon la revendication 11, où la quantité d'addition d'ignifugation est de 0,1 à 100 parties en poids, rapportée à 100 parties en poids du polymère.

13. Composition selon la revendication 11, où le polymère dépourvu d'halogène est une résine époxyde réticulée.

14. Utilisation des composés de formule I selon la revendication 1 comme agents ignifuges pour des polymères dépourvus d'halogène.

## Revendications (Revendications pour l'(les) Etat(s) contractant(s) suivant(s): ES)

1. Procédé pour préparer des composés de formule générale I 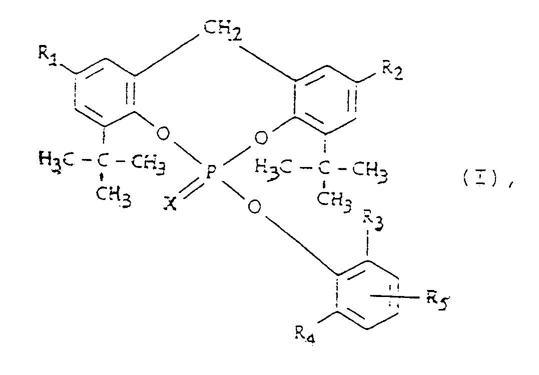 dans laquelle R₁ et R₂, indépendamment l'un de l'autre, représentent l'hydrogène, un alkyle en C₁-C₆, le phényle ou le naphtyle non substitués ou substitués par de 1 à 3 groupes alkyle en C₁-C₄, R₃ et R₄, indépendamment l'un de l'autre, représentent l'hydrogène ou un alkyle en C₁-C₄, R₃ et R₄ n'étant pas en même temps de l'hydrogène, en outre R₅ représente l'hydrogène, un alkyle en C₁-C₆, le phényle ou le naphtyle non substitués ou substitués par de 1 à 3 groupes alkyle en C₁-C₄, et X représente l'oxygène ou le soufre,
caractérisé en ce que, si X représente l'oxygène, on fait réagir un bisphénol de formule II 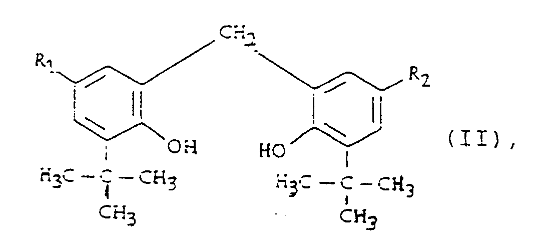 dans laquelle R₁ et R₂ ont la même signification que dans la formule I, avec un dichlorure de l'acide phosphorique de formule III 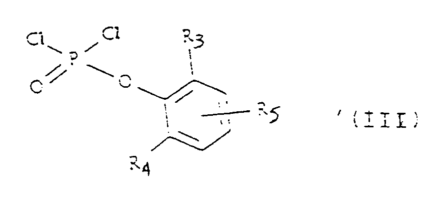 dans laquelle R₃, R₄ et R₅ ont la même signification que dans la formule I, pour obtenir le composé de formule I, ou en faisant réagir un bisphénol de formule II avec POCl₃ pour obtenir le chlorure d'acide phosphorique de formule V 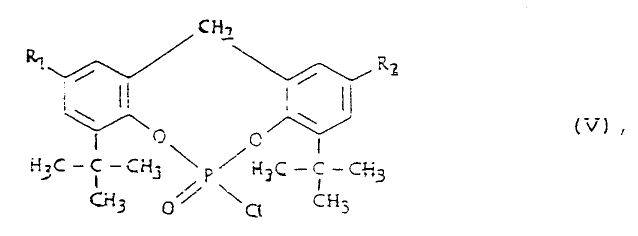 dans laquelle R₁ et R₂ ont la même signification, que l'on fait ensuite réagir avec un phénol de formule IV 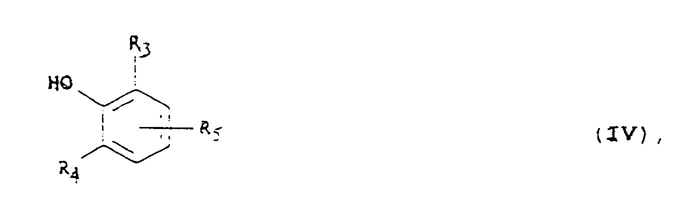 dans laquelle R₃, R₄ et R₅ ont la même signification que dans la formule I, pour obtenir un composé de formule I, ou caractérisé en ce que, si X est le soufre, on fait réagir un bisphénol de formule II avec PCl₃ pour obtenir le chlorure d'acide phosphoreux correspondant que l'on fait ensuite réagir avec un phénol de formule IV pour obtenir le phosphite de formule VI 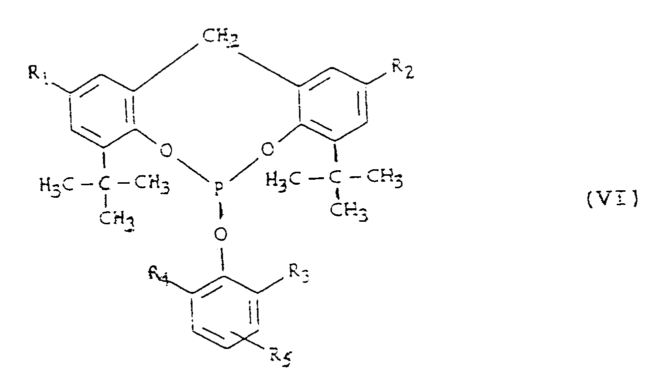 que l'on transforme ensuite, par réaction avec le soufre élémentaire, en un composé de formule I.

2. Procédé pour préparer des composés de formule I selon la revendication 1, dans laquelle X représente l'oxygène, caractérisé en ce que l'on transforme un composé de formule VI, par oxydation, en un composé de formule I.

3. Procédé selon la revendication 2, caractérisé en ce que l'on utilise comme agent d'oxydation un peracide, de préférence l'acide peracétique.
